# EUROPEAN PATENT APPLICATION

(11) **EP 1 026 022 A2**
(43) Date of publication of application: **09.08.2000**
(21) Application number: 00200019.8
(22) Date of filing: 04.01.2000
(51) Int. Cl.: B60J 10/12

(54) **Open roof construction for a vehicle**

(30) Priority: 02.02.1999 NL 1011202
(71) Applicant: Inalfa Industries B.V., 5804 AB Venray (NL)
(72) Inventor: Manders, Peter Christiaan Leonardus Johannes, 5961 SM Horst (NL)
(74) Representative: Metman, Karel Johannes

(57) **Abstract**

A panel assembly for an open roof construction for a vehicle having an opening (2) in its fixed roof (1) comprises a panel (4), preferably of plastic material, a strengthening frame (5) extending along the circumference of said panel assembly (3), and connecting means (6) for interconnecting the panel (4) and the strengthening frame (5). The strengthening frame (5) overlaps the panel (4), at least in a number of places, on the upper side.

## Description

The invention relates to a panel assembly for an open roof construction for a vehicle having an opening in its fixed roof, comprising a single panel of plastic material, a strengthening frame extending along the circumference of said panel assembly, and connecting means for interconnecting said panel and said strengthening frame.

A panel assembly of this kind is for example described in Dutch patent No. 1009807. With this panel assembly the strengthening frame is embedded in an encapsulation which forms an edge surrounding the panel, and which also functions as a connecting means between said strengthening frame and said panel.

When the panel is subjected to heavy loads from inside the vehicle, there is a risk of the bond between the encapsulation and the panel offering insufficient resistance, as a result of which the panel can be pushed outwards.

The object of the invention is to provide a panel assembly of the kind referred to in the introduction, wherein the above problem is overcome in an efficient manner.

In order to accomplish that objective, the panel assembly according to the invention is characterized in that said strengthening frame overlaps the plastic panel, at least in a number of places, on the upper side.

As a result of this overlap between the panel and the strengthening frame, the panel will be supported in upward direction by the strengthening frame in case of an outward load being exerted, so that the load will not be exerted entirely on the connecting means, such as the encapsulation or the bonding agent between said encapsulation and the panel.

According to the invention, it is advantageous when the panel includes an edge recess on the upper side, at least along part of its circumference, for receiving the part of the strengthening frame overlapping the panel at that location, and possibly the encapsulation.

In this manner it is possible to make the upper side of the panel assembly completely flat, or at least to ensure that the strengthening frame does not project above the panel, so that the appearance of the panel assembly is not adversely affected by the strengthening frame.

The invention will now be explained in more detail with reference to the drawing, which shows an embodiment of the invention.
Fig. 1 is a top plan view of a vehicle roof fitted with an open roof construction including an embodiment of the panel assembly according to the invention.
Figs.2, 3, 4 and 5 are larger-scale sectional views along, respectively, lines II-II, III-III, IV-IV and V-V in Fig. 1.

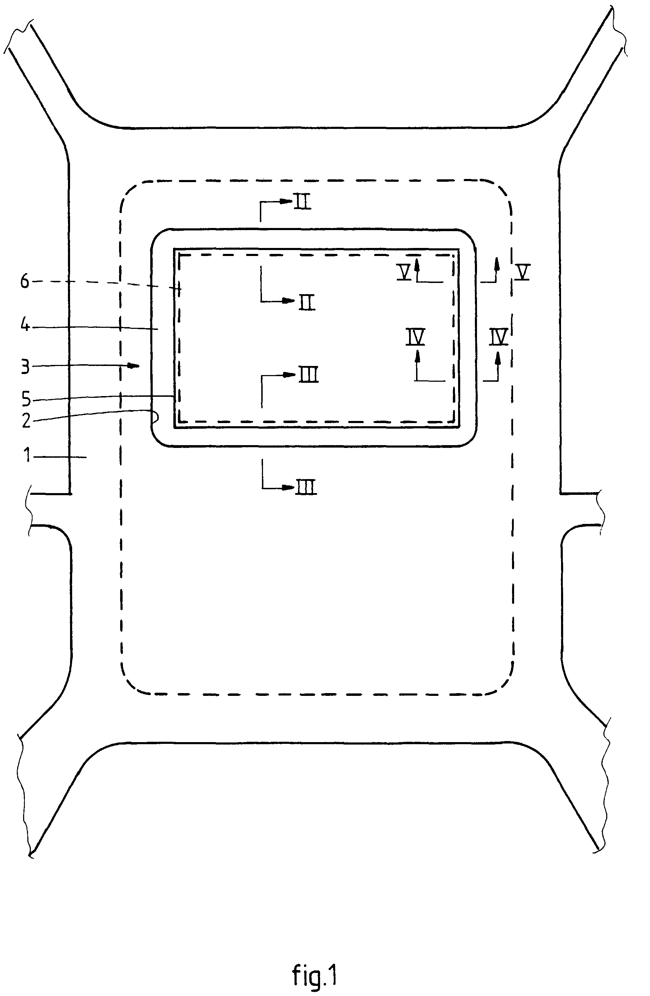

The drawing, and in the first instance Fig. 1 thereof, shows a fixed roof 1 of a vehicle, such as a passenger car, which is provided with a roof opening 2 for accommodating an open roof construction. The open roof construction includes a panel assembly 3 for selectively closing or at least partially opening the roof opening 2. The open roof construction may be one of several types, such as for example a tilting roof, a sliding tilt roof, a spoiler roof or a combination roof comprising more than one fixed and/or movable panel assemblies and/or folding roof parts.

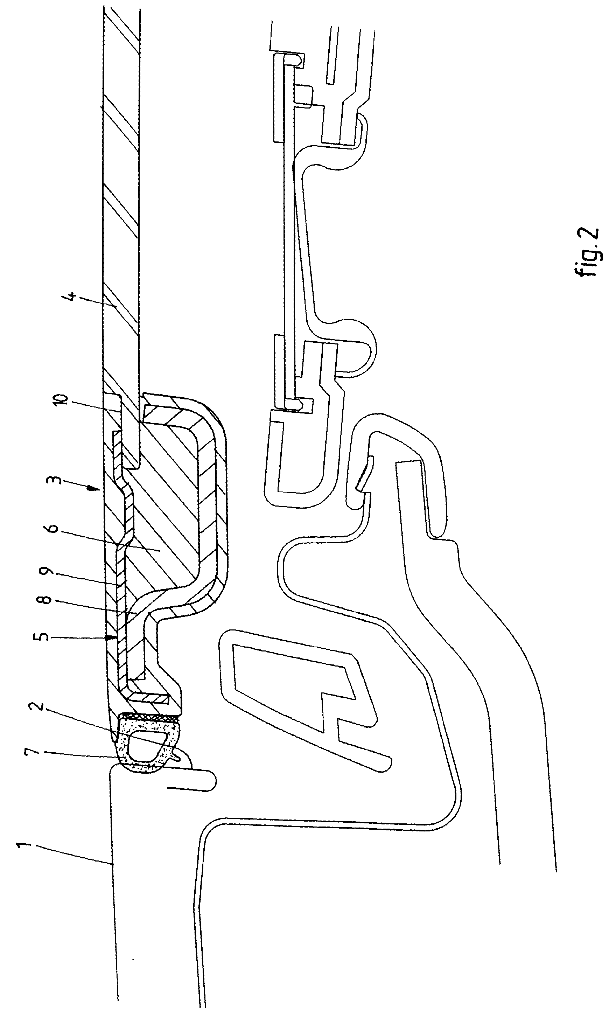

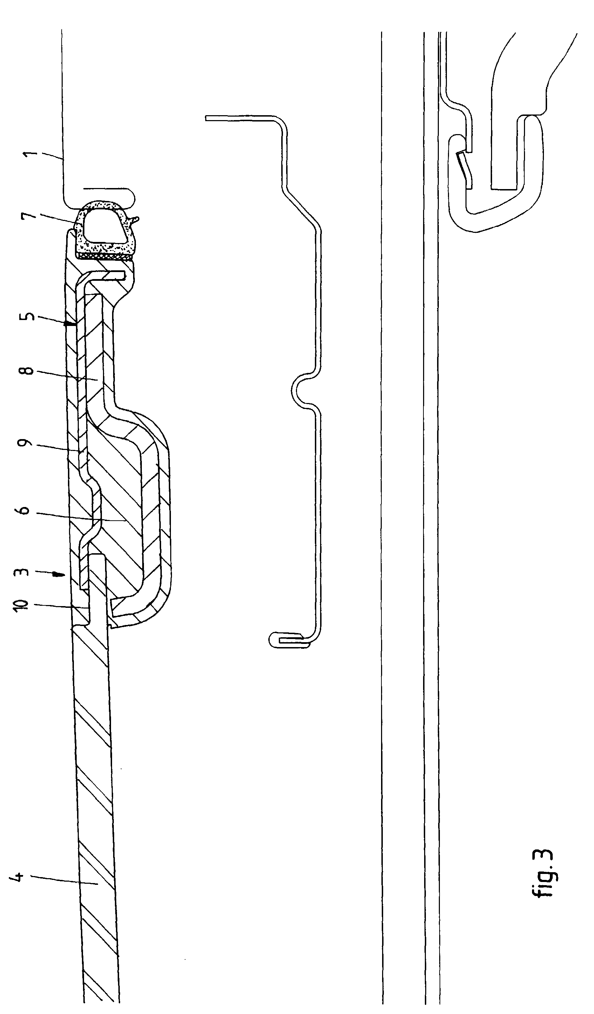

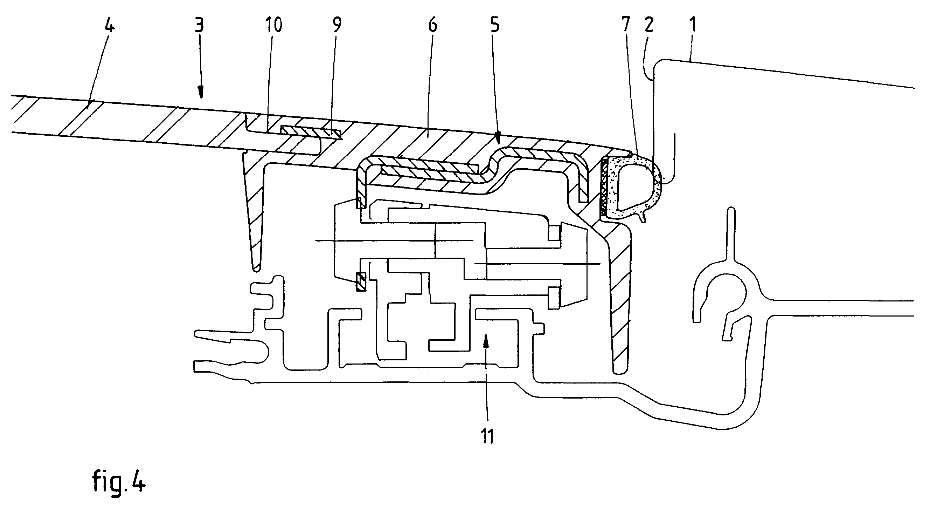

Figs. 2 - 5 are larger-scale sectional views, wherein the construction of panel assembly 3 is shown in more detail. Panel assembly 3 comprises a single unitary panel 4, which takes up the larger part of the area of panel assembly 3 and which is made of a plastic material which is preferably at least partially transparent. Panel 4 may be made of one piece of plastic material or be built up of several layers, as will be explained in more detail hereafter. Polycarbonate is the material which is preferred for panel 4, but also other plastics are conceivable, of course. Panel 4 may have a small thickness, i.e. smaller than 5 mm, for example in the order of 3 mm.

Panel assembly 3 furthermore comprises a strengthening frame 3, an encapsulation 6, and a circumferential seal 7 for cooperation with the fixed roof 1 of the vehicle, in order to seal the roof opening 2 completely in the closed position of panel assembly 3.

Strengthening frame 5 is provided for the purpose of strengthening and stiffening the panel assembly 3, and in most cases its provision is necessary because panel 4 does not have sufficient strength of its own, in particular when panel 4 is relatively thin. Strengthening frame 5 may consist of separate sections, but preferably it extends all around so as to possess maximum strength and resistance to deformation. Additional parts may be locally formed on strengthening frame 5 or be attached thereto, such as parts of the operating mechanism 11 on the sides of panel assembly 3. Said parts may also be incorporated, at least partially so, in encapsulation 6.

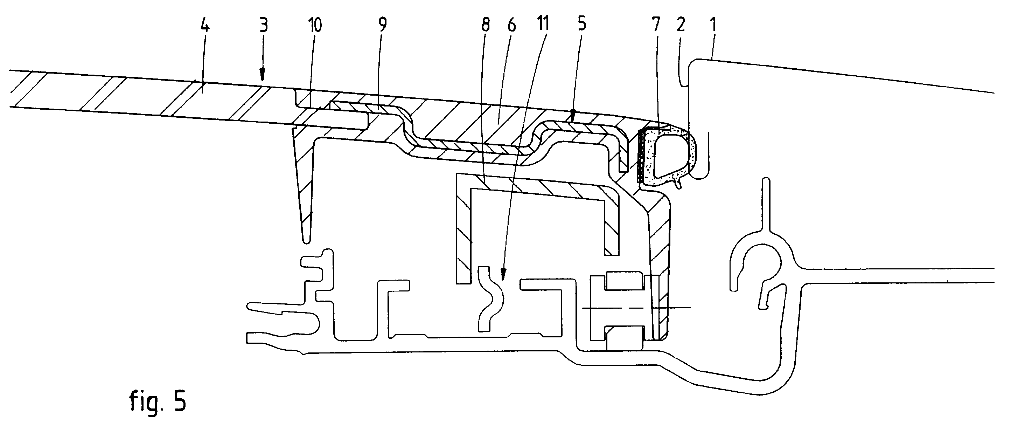

In the illustrated embodiment, strengthening frame 5 consists of a lower part 8 and an upper part 9. The two parts 8 and 9 are profiled. The profile may vary along the circumference of the panel assembly 3, as also appears from a comparison of the various sectional views in Figs. 2 - 5. Lower part 8 is the main part of the strengthening frame, which takes care of the main part of the strengthening of panel assembly 3, and consequently its thickness is greater than that of the upper part 9. Lower part 8 may extend beyond encapsulation 6 on the sides of panel assembly 3, so as to provide a connection with parts of operating mechanism 11, as will be apparent from Fig. 5. Encapsulation 6 and lower part 8 extend inwardly to beyond the outer circumference of panel 4, so that said lower part overlaps panel 4 along at least part of the circumference on line underside, together with encapsulation 6.

The upper part 9 overlaps with its inner edge the outer edge of panel 4 on the upper side. In order to prevent the upper part 9 of strengthening frame 5 from projecting above panel 4 thereby, panel 4 is provided at its circumferential edge with a recess 10 extending along the entire circumference or part thereof, in which recess the inner edge of upper part 9 of strengthening frame 5 will be positioned, and which is further filled by the material of encapsulation 6, so that the upper side of the encapsulation and the upper side of panel 4 willbecome flush. Thus, the appearance of panel assembly 3 is not adversely affected by the upper part 9 of strengthening frame 5.

Lower part 8 and upper part 9 of strengthening frame 5 are preferably interconnected in at least a number of places, for example by being welded together in places where said two parts butt hard against each other. Panel 4 is thus accommodated with some play between the two parts 8 and 9 of strengthening frame 5, and panel 4 cannot be forced apart in upward or downward direction from, respectively, encapsulation 6 or strengthening frame 5.

Encapsulation 6 may for example consist of a PU or a compound having PU as its main component or another type of plastic, which is preferably flexible. If the plastic material of panel 4 has a lower coefficient of thermal expansion, the encapsulation may be made of a comparatively harder material.

As already said before, panel 4 may consist of a plate formed by means of an injection moulding process or by means of a rolling operation, or of a combination of several plates bonded together, which may be formed by rolling, injection moulding or the like. Possibly, it is conceivable for the upper side of the entire panel assembly 3 to be provided with a coating of a glossy material, for example. This will make the panel assembly 3 look as if it were made in one piece. The thickness of said coating may be freely selected.

Encapsulation 6 is preferably made of a nontransparent material, but it is also possible to apply a lacquer or a coating to the outside of encapsulation 6. One technique for doing so is to apply the lacquer or coating to the encapsulation mould, in those places where the encapsulation 6 is to be formed. The lacquer or coating will bond to the encapsulation 6 during the encapsulation process. Of course it is thereby possible to apply the lacquer or coating only locally. In order to make panel 4 scratch-resistant, it is generally provided with a lacquer or a coating as well. In many cases the panel 4 will be tinted to a greater or lesser degree, and in principle it could be entirely non-transparent.

The invention is not restricted to the abovedescribed embodiment as shown in the drawing, which can be varied in several ways without departing from the scope of the invention. Thus, the seal may also be mounted on the underside of the panel, or no seal may be provided at all, for example if the seal is mounted on the stationary part of the open roof construction. The panel may also be made of a material other than plastic. Furthermore it is possible for the outer edge of the panel to have a different shape so as to enable the overlap with the strengthening frame. According to another possibility, the strengtheningframe overlaps the panel in a few places only, in order to lock the panel in position with respect to the strengthening frame. Also connecting means other than encapsulation with a bonding agent are conceivable, such as mechanical connecting means.

From the foregoing it will be apparent that the invention provides a panel assembly which forms a very strong whole, and which will retain its integrity, also when subjected to substantial external loads.

The invention is not restricted to the embodiment as described in the above and shown in the drawing, which can be varied in several ways within the scope of the invention.

## Claims

1. A panel assembly for an open roof construction for a vehicle having an opening (2) in its fixed roof (1), comprising a single panel (4) of plastic material, a strengthening frame (5) extending along the circumference of said panel assembly (3), and connecting means (6) for interconnecting said panel (4) and said strengthening frame (5), **characterized in that** said strengthening frame (5) overlaps the plastic panel (4), at least in a number of places, on the upper side.

2. A panel assembly according to claim 1, wherein said connecting means comprise an encapsulation (6), and wherein said strengthening frame (5) is at least partially accommodated in said encapsulation (6), and wherein the upper side of said encapsulation (6) is preferably substantiallyflush with the upper side of said panel (4).

3. A panel assembly according to claim 2, wherein said panel (4) possesses an edge recess (10) on the upper side, at least along part of its circumference, for receiving the part of the strengthening frame (5) overlapping the panel (4) at that location, and possibly the encapsulation (6).

4. A panel assembly according to any one of the preceding claims, wherein said strengthening frame (5) consists at least of a lower part (8) and an upper part (9)which are directly attached to each other, and wherein said upper part (9) overlaps the panel (4) on the upper side and said lower part (8) preferably overlaps the panel (4) on the underside.

5. A panel assembly according to claim 4, wherein said parts (8, 9) of the strengthening frame (5) do not have the same thickness, with the upper part (9) being the thinner part.

6. a panel assembly according to one of the preceding claims, wherein the panel has a relatively small thickness, e.g. smaller than 5mm, and preferably in the order of 3 mm.

7. An open roof construction for a vehicle having an opening (2) in its fixed roof (1), including a panel assembly (3) supported by an operating mechanism (11) for selectively opening or closing said roof opening, which comprises a panel (4), preferably of plastic material, a strengthening frame (5) extending along the circumference of said panel assembly (3), and connecting means (6) for interconnecting said panel (4) and said strengthening frame (5), **characterized in that** said strengthening frame (5) overlaps the panel (4), at least in a number of places, on the upper side.
